# EUROPÄISCHE PATENTSCHRIFT

(11) **EP 1 347 675 B1**
(45) Veröffentlichungstag und Bekanntmachung des Hinweises auf die Patenterteilung: **16.05.2007**
(21) Anmeldenummer: 02006735.1
(22) Anmeldetag: 23.03.2002
(51) Int. Cl.: H05K 7/14, H01H 1/58

(54) **Bedieneinheit für Fahrzeuge**
Control unit for vehicles
Unité de contrôle pour véhicules

(43) Veröffentlichungstag der Anmeldung: 24.09.2003
(73) Patentinhaber: Goodrich Lighting Systems GmbH, 59557 Lippstadt (DE)
(72) Erfinder: Slowig, Yvonne, 59557 Lippstadt (DE); Brölemann, Rolf, 33154 Salzkotten (DE)
(74) Vertreter: Hilleringmann, Jochen

(56) Entgegenhaltungen:
- EP-A- 0 841 673
- EP-A- 0 984 673
- DE-U- 8 328 123
- FR-A- 2 579 694
- US-A- 4 750 091

## Beschreibung

Die Erfindung betrifft eine Bedieneinheit insbesondere für Fahrzeuge, wie beispielsweise Flugzeuge oder Reisebusse, und betrifft insbesondere eine Bedieneinheit mit einer Platte, beispielsweise einer die Elektronik tragenden Platine, wobei die Platte mittels einer besonderen Rastverbindung befestigt ist.

Nahezu alle Verkehrsmittel sind mit Tastern als Bedienelemente für Fahrfunktionen oder Servicefunktionen ausgestattet. Diese Taster setzten sich üblicherweise zusammen aus einer in die Innenverkleidung integrierten, beweglichen Frontblende und einem dahinterliegenden, mittels der Frontblende bedienbaren, Schaltteil, das üblicherweise direkt auf einer Platine angeordnet ist, so dass die Schaltinformationen direkt an eine Überwachungs- oder Auswertungsschaltung weitergeleitet werden können.

Problematisch bei dieser Anordnung ist, dass die Platine die durch den Taster aufgebrachte Kraft aufnehmen muss. Dies erfordert eine spezielle Befestigung der Platine. Zu Austausch- und Reparaturzwecken sollte die Befestigung der Platine wieder lösbar sein.

Bislang existieren Befestigungen mit Rasthaken, die sich beim Einsetzen der Platine zunächst aufbiegen und, wenn die Platine eine Endposition erreicht hat, sich wieder zurückbewegen, so dass die Platine verrastet ist (siehe z.B. EP-A-0 984 673 und EP-A-0 841 673). Diese Rasthaken sind üblicherweise am Rand der Platine angeordnet und nehmen diese zwischen sich auf.

Jeder Rasthaken besteht aus einem flexiblen das Aufbiegen ermöglichenden Basisteil und einem am Ende des Basisteil angeordneten Anlagebereich zum Zurückhalten der Platine. Der Anlagebereich übergreift den Rand der Platine und liegt dort auf, um die Platine gegen Druck zu sichern. Ab einer bestimmten auf die Platine wirkenden Kraft, hervorgerufen beispielsweise durch einen Taster, löst sich die Verbindung mit dem konventionellen Rasthaken durch das entstehende Drehmoment, da sich die Rasthaken so weit nach außen verbiegen, bis diese die Platine nicht mehr übergreifen. Die Platine ist dann nicht mehr gesichert und wird durch weitere Krafteinleitung aus ihrer Position verschoben, was zu einem unerwünschten Ausfall der Taster führt.

In DE-U-8 328 123 ist eine Bedieneinheit beschrieben, bei der hinter einer ein Bedienelement aufweisenden Frontblende eine Platte angeordnet ist. Die Platte ist von zwei Umgreifelementen gehalten, die von der Rückseite der Frontblende abstehen. Jedes Umgreifelement weist ein im wesentlichen U-förmiges Basisteil auf, dessen erster Schenkel von der Frontblende absteht und dessen kürzerer zweiter Schenkel an seinem freien Ende einen Anlagebereich mit Rasthaken zum Halten der Platte aufweist. Wegen der U-förmigen Ausgestaltung des Basisteils ist der zweite Schenkel flexibel.

FR-A-2 579 694 zeigt ein modular aufgebautes Bedien- bzw. Anzeigeelement für eine Bedieneinheit, wobei ein Brückenteil mit abstehenden Armen an deren freien Enden nach außen vorstehende Rasthaken zum rastenden Verbinden mit einem Schalterelement aufweist.

Der Erfindung liegt die Aufgabe zu Grunde, eine Bedieneinheit für ein Fahrzeug mit verbesserter und vereinfachter Befestigung der Platte zu schaffen.

Zur Lösung dieser Aufgabe wird mit der Erfindung eine Bedieneinheit für Fahrzeuge vorgeschlagen, die versehen ist mit den Merkmalen des Anspruchs 1. Einzelne Ausgestaltungen der Erfindung sind Gegenstand der jeweiligen Unteransprüche.

Die Erfindung schlägt eine Bedieneinheit vor, bei der mindestens ein Umgreifelement als elastisch biegbarer Rasthaken ausgebildet ist, dessen von der Frontblende im wesentlichen geradlinig abstehendes Basisteil dem gegenüberliegenden Umgreifelement zugewandt und dessen Anlagebereich dem gegenüberliegenden Umgreifelement abgewandt ist. Bei einer Belastung der Platte in Richtung der Normalen der Platte und auf die Anlagebereiche des Umgreifelements bzw. Rasthaken wird auf den mindestens einen Rasthaken in Richtung auf das Umgreifelement ein Drehmoment ausgeübt. Dies führt dazu, dass der Rasthaken bei Belastung noch stärker an die Platte gedrückt wird. Dies wiederum führt dazu, dass die Platte auch bei einer sehr großen Kraft nicht zwischen dem Rasthaken und dem in diesem Falle im Wesentlichen starr ausgebildeten Umgreifelement herausgelöst werden kann.

Vorzugsweise ist zwischen dem Anlagebereich und dem Basisteil ein spitzer Winkel ausgebildet, so dass der Anlagebereich mit einer Kante und nicht mit einer Fläche auf der Platte aufliegt. Dies erleichtert die Bewegung des Anlagebereiches über die Platte, wenn diese eingerastet wird, und erhöht das Drehmoment bei auf die Platte wirkenden Belastungen.

Vorzugsweise sind am Rand der Platte Aussparungen vorgesehen, in denen der Rasthaken und/oder das Umgreifteil angeordnet ist. Diese Anordnung sorgt für eine besonders stabile Halterung der Platte.

Vorteilhafterweise überragt der Anlagebereich des Rasthakens die Aussparungen in der Platte an zwei gegenüberliegenden Aussparungsrändern, so dass sich der Basisteil des Rasthakens in der Aussparung bewegen kann, während der Anlagebereich auf der Platte aufliegt und diese hält. Alternativ oder zusätzlich überragt der Anlagebereich den die beiden zuvor genannten Ränder verbindenden Rand der Aussparung.

Die Platte kann als Leiterplatine mit bzw. für elektrischen und/oder elektronischen Schaltungen oder Bauelementen ausgebildet sein.

Vorzugsweise ist das Umgreifelement starr, sofern es nicht als Rasthaken ausgebildet ist. Das Umgreifelement kann sich auch über die gesamte Seitenkante der Platte oder einen Teil davon erstrecken.

Im Folgenden wird die Erfindung anhand der Zeichnungen näher erläutert. Es zeigen:
- Fig. 1: eine Draufsicht auf das erfindungsgemäße Bedienelement für ein Fahrzeug
- Fig. 2: eine Seitenansicht in Schnittdarstellung und
- Fig. 3: eine Rückansicht.

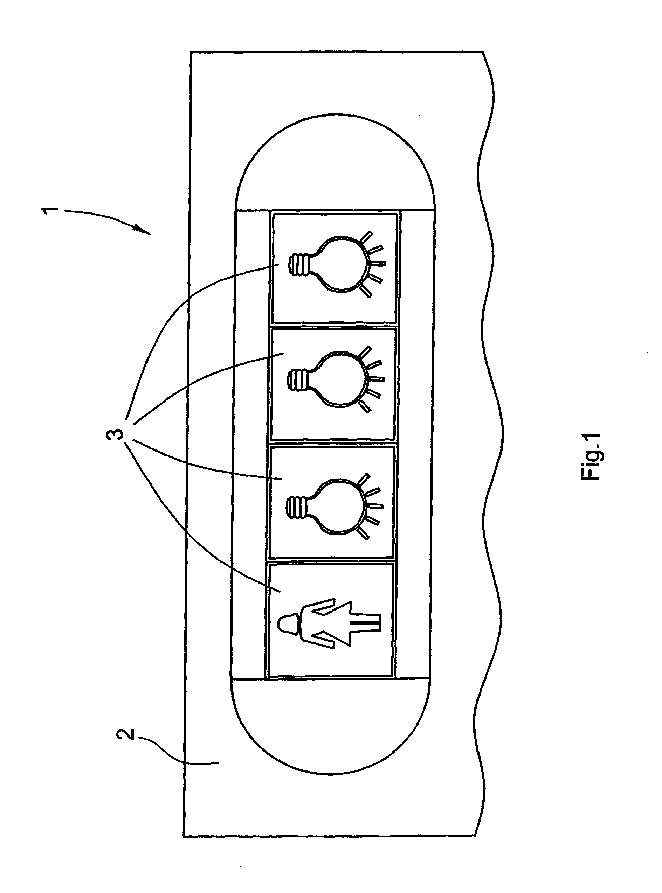

Die in Fig. 1 gezeigte Bedieneinheit 1 für Fahrzeuge, wie beispielsweise Flugzeuge oder Reisebusse, hat eine Blende 2, welche in die Inneneinrichtung des Fahrzeuges integriert ist, und mehrere Taster 3, die unterschiedliche Funktionen haben können. In Flugzeugen sind diese Funktionen typischerweise die Betätigung der Lampen über den Sitzen und das Rufen von Flugbegleitern.

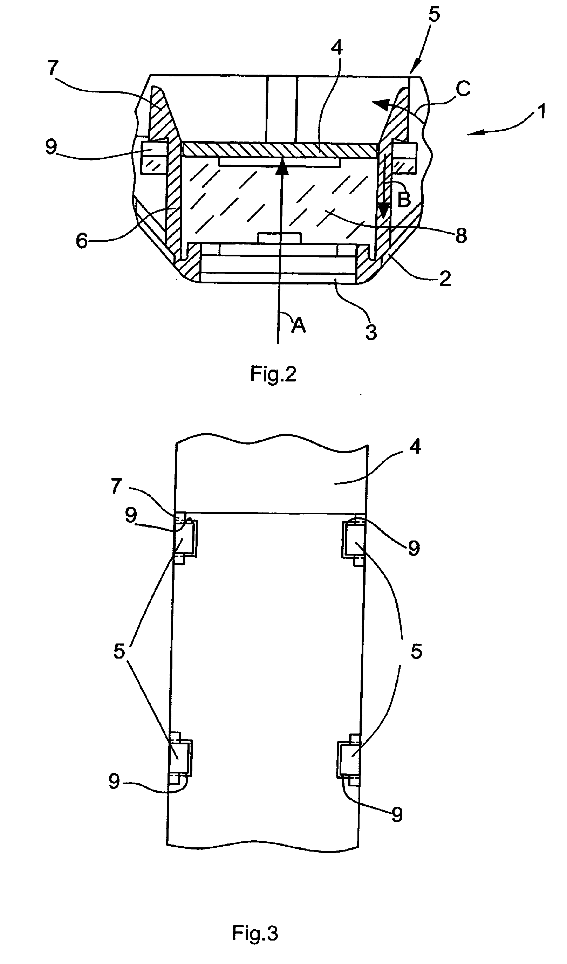

Anhand von Fig. 2 wird nun die Funktionsweise der erfindungsgemäßen Bedieneinheit 1 erläutert. Hinter der Blende 2 ist eine Platte 4, die eine Platine ist und Schaltungen zum Erfassen und Auswerten der Positionen der verschiedenen Taster 3 trägt, gehalten. Die Platte 4 wird von mehreren, an den Längsseiten der Platte 4 angeordneten, sich gegenüberliegenden Rasthaken 5 (Fig. 3) gehalten. Die Anzahl der Rasthaken 5 kann nach Länge der Platte 4 und nach der gewünschten Stärke der Befestigung variiert werden. Vorzugsweise sollten mindestens vier Rasthaken 5 verwendet werden. Jeder Rasthaken besteht aus einem an der Blende 2 befestigten Basisteil 6 und einem an dem der Blende 2 abgewandten Ende des Basisteil 6 angeordneten Anlagebereich 7, der auf der der Blende 2 abgewandten Seite der Platte 4 aufliegt. Die Länge des Basisteils 6 ist derart bemessen, dass, wenn die Platte 4 auf Stützrippen 8 aufliegt, die Anlagebereiche 7 auf die Platte 4 pressen und diese somit zwischen den Stützrippen 8 und den Anlagebereichen 7 arretiert.

An den Längsseiten der Platte 4 sind Aussparungen 9 angeordnet, durch die die Basisteile 6 der Rasthaken 5 verlaufen. Die Anlagebereiche 7 überragen die Ausnehmungen 9 seitlich, d.h. in Längsrichtung der Platte 4, um so einen Haltedruck auf die Platte 4 auszuüben.

Nun wird das Einsetzen der Platte 4 beschrieben. Vor dem Einsetzen der Platte 4 befinden sich die Rasthaken 5 in der in Fig. 2 dargestellten Position. Beim Hineindrücken der Platte 4 in die Bedieneinheit 1 in Richtung der Blende 2 greift der Rand der Platte 4 an den einander zugewandten Teilen der Anlagebereiche 7 an, welche die Aussparung 9 seitlich überragen, was dazu führt, dass sich die Rasthaken auseinanderbiegen. Dies ist möglich, da zum einen der Basisteil 6 flexibel ist und zum anderen der eben genannte mit der Platte 4 in Verbindung tretende Teil der Anlagebereiche 7 abgeschrägt ist. Bei fortschreitender Bewegung der Platte 4 in Richtung der Blende 2 werden die Rasthaken 5 also weiter auseinander gedrückt, d.h. voneinander fortbewegt. Die Platte 4 wird soweit bewegt, bis sie auf den Stützrippen 8 aufliegt. Wenn die Platte 4 diese Position erreicht hat, hat sie die abgeschrägten, innenliegenden Bereiche der Anlagebereiche 7, an denen sie entlanggeglitten ist, passiert, so dass die Rasthaken 5 nicht weiter nach außen gedrückt werden. Auf Grund der Vorspannung der flexiblen Basisteile 6 kehren die Rasthaken 5 wieder in die in Fig. 2 gezeigte Position zurück, wobei die Anlagebereiche 7 nun auf der der Blende 2 abgewandten Rückseite der Platte 4 aufliegen, so dass die Platte 4 zwischen den Stützrippen 8 und den Anlagebereichen 7 fixiert ist.

Die Anlagebereiche 7 bilden mit dem Basisteil 6 jeweils einen spitzen Winkel, so dass der Anlagebereich 7 nur mit einer Kante oder einer relativ schmalen Fläche an der Platte 4 anliegt. Dies erleichtert das Gleiten der Anlagebereiche 7 auf der Platte 4, wenn die Rasthaken 5 beim Einsetzen der Platte 4 einrasten bzw. einschnappen.

Wird nun vom Passagier ein Taster 3 gedrückt, wirkt eine Kraft in Richtung des Pfeils A auf die Platte 4. Die Platte 4 muss trotz dieser Kraft in ihrer Position verbleiben, da ansonsten die Funktionsfähigkeit der Bedieneinheit 1 nicht mehr gewährleistet ist. Die durch den Taster 3 auf die Platte 4 aufgebrachte Kraft erzeugt in den Rasthaken 5 eine resultierende Kraft in Richtung des Pfeils B. Da die Krafteinleitung in den Rasthaken 5 außerhalb der neutralen Ebene des Rasthakens 5 erfolgt, nämlich an der aufliegenden Kante des Anlagebereichs 7, entsteht ein Drehmoment in Richtung des Pfeils C. Die Richtung dieses Drehmomentes führt dazu, dass die Rasthaken 5 sich bei Krafteinleitung noch fester an die Platte 4 anlegen. Die Platte 4 wird also umso fester gehalten, je größer die auf sie ausgeübte Kraft ist. Die Stärke des ausgeübten Drehmoments kann über die Entfernung der auf der Platte 4 aufliegenden Kante des Anlagebereichs 7 zu dem Basisteil 6 eingestellt werden. Je weiter die Kante von dem Basisteil 6 entfernt ist, desto größer wird das ausgeübte Drehmoment sein.

Falls die Platte 4 zu Reparatur- oder Austauschzwecken aus der Bedieneinheit 1 entnommen werden soll, dann werden die Rasthaken 5 auseinandergebogen bis der Anlagebereich 7 sich außerhalb der Platte 4 befindet, also keinen Druck mehr auf sie ausübt. Dann kann die Platte 4 auf einfache Weise entnommen werden.

Die Erfindung wurde vorstehend anhand der Verwendung mindestens eines Paares von Rasthaken beschrieben, die beidseitig der Platte angeordnet sind. Es ist aber auch denkbar, dass lediglich an einem Rand der Platte ein oder mehrere Rasthaken der oben beschriebenen Art vorhanden ist/sind. An dem gegenüberliegenden Rand der Platte ist diese z.B. von einem starren Umgreifvorsprung umgriffen, hinter den die Platte (schräg verlaufend) eingesetzt wird, um dann durch Verschwenken mit dem oder den Rasthaken zu verrasten. Der Basisteil jedes einseitig der Platte angeordneten Rasthakens ist dabei dem gegenüberliegenden Plattenrand bzw. Haltepunkt (z.B. Umgreifvorsprung) zugewandt, während sein Anlagebereich diesem Plattenrand abgewandt ist.

## Patentansprüche

1. Bedieneinheit für ein Fahrzeug mit
- einer Frontblende (2),
- einer hinter der Frontblende (2) angeordneten Platte (4),
- mindestens zwei von der Frontblende (2) abstehenden und die Platte (4) zwischen sich aufnehmenden Umgreifelementen, von denen jedes einen die Platte (4) zurückhaltenden Anlagebereich (7) und einen den Anlagebereich (7) tragenden Basisteil (6) aufweist, der sich von der Frontblende (2) aus bis zum Anlagebereich (7) im wesentlichen geradlinig erstreckt,
- wobei mindestens eines der Umgreifelemente als elastischer Rasthaken (5) ausgebildet ist,
**dadurch gekennzeichnet,**
- **dass** der Anlagebereich (7) des mindestens einen Rasthakens (5) auf derjenigen Seite seines Basisteils (6) angeordnet ist, die dem anderen Umgreifelement abgewandt ist, wobei bei einer Kraftausübung auf die Platte (4) in Richtung auf den Anlagebereich (7) des mindestens einen Rasthakens (5) dieser in Richtung auf das Umgreifelement bewegbar ist.

2. Bedieneinheit nach Anspruch 1, **dadurch gekennzeichnet, dass** der mindestens eine Rasthaken (5) zwischen seinem Anlagebereich (7) und seinem Basisteil (6) einen spitzer Winkel aufweist.

3. Bedieneinheit nach Anspruch 1 oder 2, **dadurch gekennzeichnet, dass** der Basisteil (6) des mindestens einen Rasthaken (5) elastisch biegbar ist.

4. Bedieneinheit nach einem der Ansprüche 1 bis 3, **dadurch gekennzeichnet, dass** in der Platte (4) am Rand eine Aussparung (9) für den mindestens einen Rasthaken (5) vorgesehen ist.

5. Bedieneinheit nach Anspruch 4, **dadurch gekennzeichnet, dass** der Anlagebereich (7) des Rasthakens (5) die Aussparung (9) in der Platte (4) an zwei gegenüberliegenden Rändern der Aussparung (9) und/oder an dem diese beiden Ränder verbindenden Rand der Aussparung (9) überragt.

6. Bedieneinheit nach einem der Ansprüche 1 bis 5, **dadurch gekennzeichnet, dass** die Platte (4) eine Platine für elektrische und/oder elektronische Schaltungen und/oder Bauteile ist.

7. Bedieneinheit nach einem der Ansprüche 1-6, **dadurch gekennzeichnet, dass** die mindestens zwei Umgreifelemente jeweils als elastische Rasthaken (5) ausgebildet sind und dass die Basisteile (6) der Rasthaken (5) einander zugewandt und die Anlagebereiche (7) einander abgewandt sind, wobei bei einer Belastung der Platte (4) in Richtung auf die Anlagebereiche (7) jeder Rasthaken (5) ein Drehmoment in Richtung auf den jeweils anderen Rasthaken (5) erfährt.

## Claims

1. An operating device for a vehicle, comprising
- a front panel (2),
- a board (4) disposed behind said front panel (2), and
- at least two encompassing elements projecting from said front panel (2) and receiving the board (4) between them, each of which comprises a contact portion (7) retaining the board (4) and a base part (6) supporting the contact portion (7) and extending from the front panel (2) to the contact portion (7) in a substantially straight manner,
- wherein at least one of the encompassing elements is configured as an elastic catch hook (5), and
**characterized in**
- **that** the contact portion (7) of the at least one catch hook (5) is arranged on that side of its base part (6) that faces away from the other encompassing element, wherein, upon the exertion of force on the board (4) in the direction of the contact portion (7) of the at least one catch hook (5), the latter is movable towards the encompassing element.

2. The operating device of claim 1, **characterized in that** the at least one catch hook (5) forms an acute angle between its contact portion (7) and its base part (6).

3. The operating device of claim 1 or 2, **characterized in that** the base part (6) of the at least one catch hook (5) is elastically bendable.

4. The operating device of one of claims 1-3, **characterized in that** a recess (9) for the at least one catch hook (5) is provided in the board (4) at the border.

5. The operating device of claim 4, **characterized in that** the contact portion (7) of the catch hook (5) rises above the recess (9) in the board (4) at two opposed borders of the recess (9) and/or at the border of the recess (9) connecting these two borders.

6. The operating device of one of claims 1 to 5, **characterized in that** the board (4) is a printed circuit board for electric and/or electronic circuits and/or components.

7. The operating device of one of claims 1-6, **characterized in that** the at least two encompassing elements are configured as elastic catch hooks (5), respectively, and that the base parts (6) of the catch hooks (5) face each other and the contact portions (7) face away from each other, each catch hook (5) experiencing a torque in the direction of the respectively other catch hook (5) when the board (4) is loaded in the direction of the contact portions (7).

## Revendications

1. Unité de contrôle pour un véhicule comprenant :
- un bandeau avant (2),
- une plaque (4) disposée derrière le bandeau avant (2),
- au moins deux éléments d'enserrage, faisant saillie du bandeau avant (2) et recevant entre eux la plaque (4), dont chacun présente une région d'appui (7) retenant la plaque (4), et une partie de base (6) portant la région d'appui (7) et s'étendant sensiblement en ligne droite depuis le bandeau avant (2) jusqu'à la région d'appui (7),
- au moins l'un des éléments d'enserrage étant réalisé en tant que crochet d'encliquetage élastique (5),
**caractérisé en ce que**
- la région d'appui (7) du au moins un crochet d'encliquetage (5) est disposée sur le côté de sa partie de base (6) opposé à l'autre élément d'enserrage, et, lorsqu'une force est exercée sur la plaque (4) en direction de la région d'appui (7) du au moins un crochet d'encliquetage (5), celui-ci est déplaçable en direction de l'autre élément d'enserrage.

2. Unité de contrôle selon la revendication 1, **caractérisé en ce que** le au moins un crochet d'encliquetage (5) présente un angle aigu entre sa région d'appui (7) et sa partie de base (6).

3. Unité de contrôle selon la revendication 1 ou 2, **caractérisé en ce que** la partie de base (6) du au moins un crochet d'encliquetage (5) est élastiquement flexible.

4. Unité de contrôle selon l'une des revendications 1 à 3, **caractérisé en ce qu'**est prévu dans la plaque (4), en bordure de celle-ci, un évidement (9) pour le au moins un crochet d'encliquetage (5).

5. Unité de contrôle selon la revendication 4, **caractérisé en ce que** la région d'appui (7) du crochet d'encliquetage (5) dépasse en hauteur l'évidement (9) ménagé dans la plaque (4) sur deux bords opposés de l'évidement (9) et/ou sur le bord de l'évidement (9) reliant ces deux bords.

6. Unité de contrôle selon l'une des revendications 1 à 5, **caractérisé en ce que** la plaque (4) est une platine pour circuits et/ou composants électriques et/ou électroniques.

7. Unité de contrôle selon l'une des revendications 1 à 6, **caractérisé en ce que** les au moins deux éléments d'enserrage sont réalisés chacun en tant que crochets d'encliquetage élastiques (5) et **en ce que** les parties de base (6) des crochets d'encliquetage (5) sont tournées l'une vers l'autre et que les régions d'appui (7) sont opposées l'une à l'autre, un couple de rotation étant appliqué à chaque crochet d'encliquetage (5) en direction de l'autre crochet d'encliquetage (5) considéré en cas de sollicitation de la plaque (4) en direction des régions d'appui (7).
